Europäisches Patentamt

European Patent Office

Office européen des brevets

(19)

(11) Veröffentlichungsnummer: **0 059 788**
**B1**

(12)

# EUROPÄISCHE PATENTSCHRIFT

(45) Veröffentlichungstag der Patentschrift:
23.04.86

(21) Anmeldenummer: 81108596.8

(22) Anmeldetag: 20.10.81

(51) Int. Cl.⁴: **G 02 B 6/12**, G 02 F 1/29

(54) **Optisches spektrales Filter mit wenigstens zwei 180 Grad-Umlenkern.**

(30) Priorität: 09.03.81 DE 3108814

(43) Veröffentlichungstag der Anmeldung:
15.09.82 Patentblatt 82/37

(45) Bekanntmachung des Hinweises auf die Patenterteilung:
23.04.86 Patentblatt 86/17

(84) Benannte Vertragsstaaten:
DE FR GB

(56) Entgegenhaltungen:
DE - A - 2 901 074
US - A - 3 589 794
US - A - 4 278 321

OPTICS COMMUNICATIONS, Band 36, Nr. 4, 15. Februar 1981, Amsterdam, K.H. TIETGEN et al. "180 grad-Turns in Integrated Optics", Seiten 281-284
IEEE JOURNAL OF QUANTUM ELECTRONICS, Band QE-17, Nr. 6, Juni 1981, Ne York, R.C. ALFERNESS "Guides-Wave Devices for Optical Communication", Seiten 946-959

(73) Patentinhaber: Siemens Aktiengesellschaft, Berlin und München Wittelsbacherplatz 2, D-8000 München 2 (DE)

(72) Erfinder: Kersten, Ralf Thomas, Dr.,
Hildegardstrasse 2A, D-1000 Berlin 31 (DE)
Erfinder: Tietgen, Karl-Heinz, Dipl.-Ing., Motzstrasse 9, D-1000 Berlin 31 (DE)
Erfinder: Schlaak, Helmut F., Dipl.-Ing., Saatwinkler Damm 139, D-1000 Berlin 13 (DE)

## Beschreibung

Die Erfindung betrifft ein optisches spektrales Filter nach dem Oberbegriff des Anspruchs 1.

Aus der DE-A-2 901 074 ist ein elektrisch einstellbares optisches Filter bekannt, bei dem zwei Wellenleiter, die jeweils eine verschiedene Kombination von Abmessung und Brechungsindex derart aufweisen, dass die Fortpflanzungskonstante des zweiten Wellenleiters mit der des ersten Wellenleiters bei nur einer Wellenlänge identisch ist, so angeordnet sind, dass Lichtenergie nur in einem etwa auf die eine Wellenlänge zentrierten Wellenlängenbereich zwischen den beiden Wellenleitern selektiv gekoppelt ist. Zusätzlich ist eine Elektrodenanordnung bei den beiden Wellenleitern derart angeordnet, dass ein an die Elektrodenanordnung angelegtes Potential entgegengesetzte Änderungen in den Brechungsindizes der beiden Wellenleiter erzeugen kann. Da die beiden Wellenleiter nicht identisch sind, können sie mit getrennten unterschiedlichen Dispersionskennlinien derart hergestellt werden, dass die beiden Wellenleiter einen identischen Brechungsindex nur bei einer einzigen Wellenlänge haben. Nur für Wellenlängen in der Nähe dieser sogenannten Phasenanpass-Wellenlänge kann Energie von einem auf den anderen Wellenleiter gekoppelt werden. Durch an die Elektroden angelegten Potentiale können die effektiven Brechungsindizes der Wellenleiter durch den elektrooptischen Effekt geändert werden. Demgemäss kann auch die Wellenlänge, bei der maximale Energieübertragung auftritt, durch Ändern der Grösse der angelegten Potentiale geändert werden. Darüber hinaus wird, wenn die gewünschte Phasenanpass-Wellenlänge erreicht wird, jedes der Potentiale auf den beiden Elektrodenpaaren durch einen im wesentlichen gleichen, aber entgegengesetzten Betrag gestört, um den Übertragungswirkungsgrad bei der Filtermittelwellenlänge auf einen dicht bei 100% liegenden Wert einzustellen. Ein Filter nach diesem bekannten Stand der Technik weist eine phasenangepasste Aufteilung der Eingangslichtleistung auf die beiden Wellenleiter des Filters auf. Ein Filter nach diesem genannten Stand der Tecknik kann jedoch nicht schmalbandig aufgebaut werden.

Als Möglichkeit zur Rückführung des Lichtes in integriert optischen Schaltungen wurden kreisförmig gekrümmte Wellenleiter untersucht («Losses in Diffused LiNbO$_3$ Waveguides by Directional Changes», Digest of Topical Meeting on Integrated and Guided-Wave Optics, Incline Village, 28–30, January 1980, Paper WB 2, von L.D. Hutcheson, I.A. White, J.J. Burke). Die zwangsläufig auftretenden Abstrahlverluste nehmen dabei mit zunehmender Differenz des Brechungsindex zwischen Wellenleiter und Aussenmedium ab und sind von den Wellenleiterquerschnittsabmessungen, der Wellenlänge und dem Krümmungsradius abhängig. Die Querschnittsabmessungen lassen sich für den Monomode-Betrieb unsymmetrischer Wellenleiter bei einer festen Lichtwellenlänge nur geringfügig variieren. Die Brechzahldifferenz zwischen durch Eindiffusion von Titan in Lithiumniobat entstandenen Wellenleitern und dem Lithiumniobat-Substrat liegt zwischen 0.005 und 0.01. Für geringe Verluste (etwa 0.5 dB für 180°-Umlenkung) resultieren hieraus minimale Krümmungsradien von mehreren Zentimetern.

In «Optics Communications» 36 (1981), Seiten 281 bis 284, ist ein 180°-Umlenker beschrieben, der als halbierter Richtkoppler ausgebildet ist, dessen Endfläche verspiegelt ist. Durch Steuerelektroden können in benachbarten Abschnitten des Richtkopplers dabei gegensinnige Verstimmungen hervorgerufen werden. Zwischen den Steuerelektroden und den verspiegelten Endflächen der Wellenleiter kann ein Abstand bestehen.

Der vorliegenden Erfindung liegt die Aufgabe zugrunde, ein optisches spektrales Filter nach dem Oberbegriff des Anspruchs 1 anzugeben, welches auch schmalbandig aufgebaut werden kann. Diese Aufgabe wird erfindungsgemäss durch ein optisches Filter nach dem Anspruch 1 gelöst. Ein schmalbandig aufgebautes Filter muss nicht unbedingt Steuerelektroden aufweisen.

Ein optischer Richtkoppler zur phasenangepassten Aufteilung der Eingangslichtleistung ist nach dem Anspruch 3 steuerbar. Damit können Filterstrukturen mit nicht-optimalen Richtkopplerlängen zu sehr schmalbandigen Filtern verstimmt werden. Ausserdem können damit Sperrbereiche und Durchlassbereiche des Filters durch elektrisch hervorgerufene Verstimmung verschoben werden.

Ein optisches Filter nach dem Anspruch 4 weist als Spezialfall einen 2-Stufen-$\Delta\beta$-Reversal-Richtkoppler zur phasenangepassten Aufteilung der Eingangslichtleistung auf.

Ein Filter nach der Erfindung weist folgende Vorzüge auf:

Die Stärke der Rückkopplung kann über die beiden Rückführungs-Richtkoppler beliebig verändert werden, so dass z.B. eine zusätzliche Modulation möglich ist.

Die Resonatorlänge kann, bei gleicher Baulänge und nur unwesentlich grösserer Breite, doppelt so gross werden.

Wenn in der Rückkopplungsschleife des Filters noch ein Phasenschieber angebracht wird, kann das Filter kontinuierlich in der Frequenz verstimmt werden.

Die Dämpfung in der Rückkopplungsschleife kann beeinflusst werden.

Es handelt sich bei einem Filter nach der Erfindung um eine kodirektionale, rückwirkungsfreie Kopplung, bei der kein Einfluss auf die Quelle bzw. den Koppplereingang erfolgt.

Die Verwendung eines erfindungsgemässen optischen Filters ist nicht auf Monomode-Lichtleiter beschränkt.

Da es verschiedene Möglichkeiten für die Realisierung von Richtkopplern gibt, bieten sich verschiedene Kombinationsmöglichkeiten für die Verwendung von 180°-Umlenkern für ein optisches spektrales Filter nach der Erfindung an. Dabei ist wesentlich, dass innerhalb solcher komplexer Strukturen für ein optisches spektrales Filter die Phasensensitivität von Richtkopplern beachtet wird.

Technologische Schwierigkeiten bereitet bereits bei Verwendung eines normalen Richtkopplers die für eine vollständige Überkopplung des Lichtes in den zweiten Kopplerarm des verwendeten Richtkopplers exakt einzuhaltende, vom Kopplungskoeffizienten zwischen den Wellenleitern abhängige Koppellänge. Dieses Problem lässt sich durch Verwendung eines steuerbaren Richtkopplers mit benachbarten Abschnitten gegensinniger Verstimmungen («Switched Directional Couplers with Alternating $\Delta\beta$», IEEE, Vol. QE-12, No. 7, July 1976, 396–401 von H. Kogelnik, R.V. Schmidt) lösen. Die in dieser Veröffentlichung beschriebenen steuerbaren Richtkoppler weisen besonders bezüglich der einfachen Justage und des einfachen Aufbaus der Elektroden Vorteile auf, wodurch sich so eine leichte Herstellung und hohe Schaltfrequenzen bei einem optischen spektralen Filter realisieren lassen.

Um bei einem verwendeten steuerbaren Richtkoppler einen Kurzschluss des der verspiegelten Endfläche am nächsten liegenden Elektrodenpaares bei Verwendung einer metallischen Verspiegelung zu verhindern, vor allem aber, weil sich bei der notwendigen Bearbeitung der Kante durch Schleifen und Polieren nicht beliebig genaue Längen abtragen lassen, besteht in einer Ausgestaltung der Erfindung zwischen den Steuerelektroden und den verspiegelten Endflächen der Wellenleiter des verwendeten steuerbaren Richtkopplers ein Abstand d. Das Vorhandensein eines solchen Abstands d bei einem verwendeten steuerbaren Richtkoppler lässt eine vollständige Überkopplung des Lichtes in den zweiten Arm dieses Richtkopplers nicht mehr zu. Um trotz des Vorhandenseins eines Abstands d das Licht vollständig in den zweiten Arm des verwendeten steuerbaren Richtkopplers überkoppeln zu können, ist zwischen einem verwendeten steuerbaren Richtkoppler und den verspiegelten Endflächen der zugehörigen Streifenwellenleiter ein Phasenschieber angeordnet. Dabei kann der verwendete steuerbare Richtkoppler so verstimmt werden, dass er als Leistungsteiler (3 dB-Koppler) arbeitet. Dabei kann am Phasenschieber die Phasendrehung eingestellt werden.

Wenn ein spektrales Kammfilter einen 2-Stufen-$\Delta\beta$-Richtkoppler und zwei halbierte Richtkoppler aufweist, lässt sich damit ein sehr schmalbandiges optisches Filter aufbauen, dessen Eigenschaften durch den Anteil der Rückkopplung und die dabei eingeführte Phasenverschiebung stark zu beeinflussen sind. Da dieses spektrale optische Filter schmalbandig aufgebaut werden kann, lassen sich minimale Änderungen in der Wellenlänge der Quelle detektieren.

Die Erfindung wird anhand der Zeichnung näher erläutert:

Fig. 1 bis 5 zeigen bzw. erläutern Richtkoppler zur 180°-Strahlumlenkung, wie sie vorteilhafterweise für ein optisches spektrales Filter verwendet werden können.

Fig. 6 zeigt ein spektrales Kammfilter.

Fig. 7 erläutert eine Einzelheit des spektralen Kammfilters nach Fig. 6.

Fig. 8 zeigt einen $\Delta\beta$-Reversal-Richtkoppler, wie er im spektralen Kammfilter nach Fig. 6 verwendet wird.

Fig. 9 zeigt ein mathematisches Modell für das rückgekoppelte System von Fig. 6.

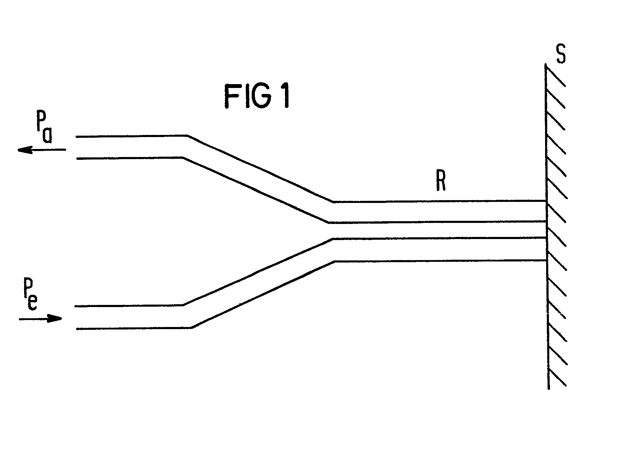

Fig. 1 zeigt einen 180°-Umlenker, wie er vorteilhafterweise für ein Kammfilter verwendet werden kann, mit einem halbierten Richtkoppler R, dessen Endfläche mit einem Spiegel S verspiegelt ist. Wenn die Länge 1 des nicht halbierten Richtkopplers gleich ist der sogenannten einfachen Koppellänge L, dann wird die gesamte Lichtleistung $P_e$, die in den einen Arm des Richtkopplers R eingekoppelt wird, in den anderen Arm des Richtkopplers R übergekoppelt und erscheint als Lichtleistung $L_a$ am Ausgang des 180°-Umlenkers. Verluste treten dabei nur infolge der üblichen Wellenleiterdämpfung und infolge des Spiegels S auf. Unter der Annahme, dass die Dämpfung für Titandiffundierte Lithiumniobat-Wellenleiter 0,1 dB/cm beträgt, dass 95% der Lichtleistung am Spiegel S reflektiert wird und dass die Gesamtlänge des Richtkopplers 2 mm beträgt, betragen die Verluste bei einem solchen 180°-Umlenker weniger als 0,3 dB. Als Spiegel S können sowohl dielektrische Vielfach-Schichten als auch metallische Überzüge verwendet werden. Wichtig ist dabei, dass der Spiegel S eine hohe Reflektivität aufweist. Zu diesem Zweck müssen die Seitenwände des Substrats mit heute üblichen Verfahren hochpoliert werden und die Kanten des Substrats müssen so scharf wie möglich hergestellt werden. Auf eine so bearbeitete Endfläche des halbierten Richtkopplers kann der Spiegel S ohne weiteres aufgebracht werden. Da die Seitenwände des Substrats erst nach der Herstellung des integriert optischen Filters poliert werden können, wird die Länge 1 des Richtkopplers in nicht definierter Weise verändert.

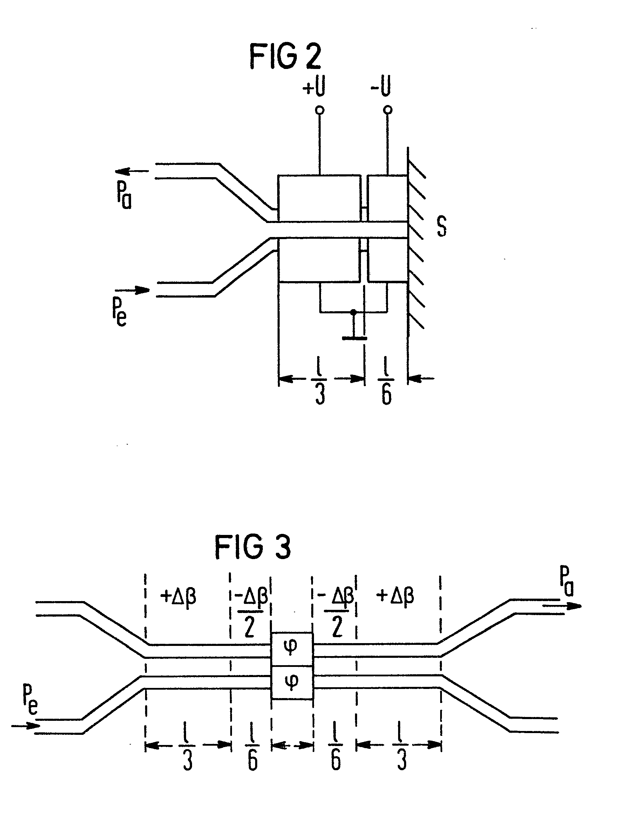

Um die Überkopplung von Lichtleistung von einem Arm zum anderen Arm eines für ein optisches spektrales Filter verwendeten Richtkopplers von beliebiger Länge 1 kontrollieren zu können, werden sogenannte $\Delta\beta$-Reversal-Richtkoppler verwendet. Ein $\Delta\beta$-Reversal-Richtkoppler ist ein steuerbarer Richtkoppler mit benachbarten Abschnitten gegensinniger Verstimmung (R.V. Schmidt, H. Kogelnik, «Appl. Phys. Lttrs.» 28 (1976) 9, 503–506). Wenn für ein optisches spektrales Filter halbierte Richtkoppler verwendet werden, kommen dafür nur $\Delta\beta$-Reversal-Richtkoppler mit einer ungeraden Zahl von Stufen in Betracht. Fig. 2 zeigt einen 180°-Umlenker, wie er für ein optisches spektrales Filter verwendet werden kann, der einen steuerbaren Richtkoppler mit der Länge 1 mit benachbarten Abschnitten gegensinniger Verstimmung aufweist. Ein Abschnitt des halbierten Richtkopplers mit der Länge $\frac{1}{6}$ unmittelbar vor dem Spiegel S wird mit der Spannung –U angesteuert, während der restliche Bereich des halbierten Richtkopplers mit der Länge $\frac{1}{3}$ mit der Spannung +U angesteuert wird. Die Struktur des in Fig. 2 gezeigten 180°-Umlenkers ist äquivalent dem in Fig. 3 gezeigten, 3-stufigen, gegensinnig verstimmten Richtkoppler. Die eingezeichneten Phasenverschiebungen φ werden durch Reflexion am Spiegel S hervorgerufen und beeinflussen bei Gleichheit der Phasenverschiebung φ die prinzipielle Arbeitsweise des Richtkopplers nicht. Welcher Anteil der eingekoppelten Lichtleistung $P_e$ bei einem 180°-Umlenker nach Fig. 2 übergekoppelt wird, wird durch Anpassung der angelegten Spannung U festgelegt.

Bei der Herstellung eines 180°-Umlenkers nach Fig. 2 taucht wiederum das Problem auf, dass sich bei der notwendigen Bearbeitung der Kante des Substrats und der Seitenwände des Substrats durch Schleifen und Polieren nicht beliebig genaue Längen abtragen lassen. Das Ersatzschaltbild eines solchen 180°-Umlenkers würde dann ungleiche Abschnitte aufweisen. Es ist jedoch bekannt, dass bei einem $\Delta\beta$-Reversal-Richtkoppler mit ungleichen Abschnitten gegensinniger Verstimmung eine Überkopplung von einem Arm zum anderen von 100% nicht erzielt werden kann.

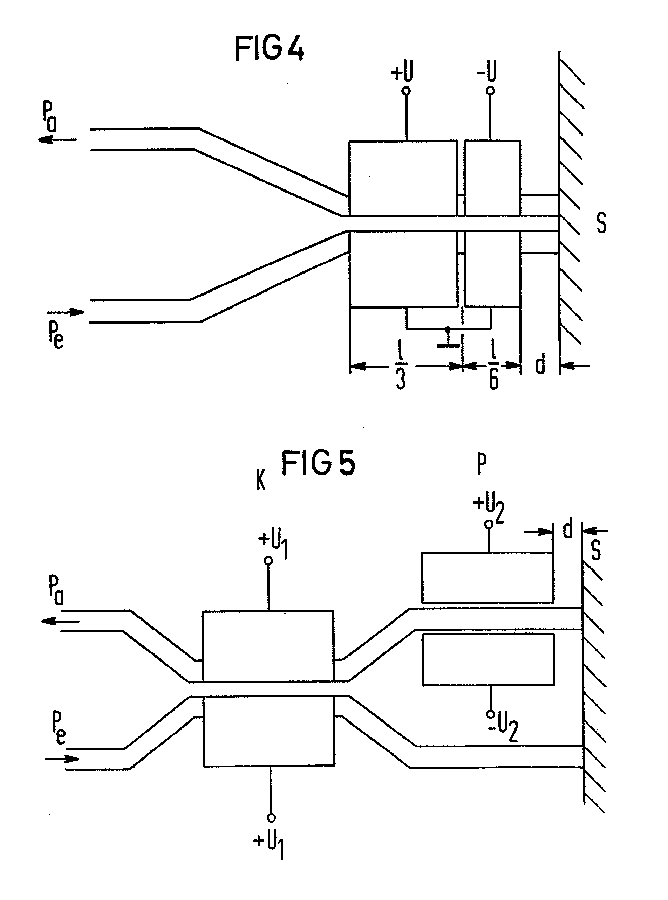

Um diesem Umstand Rechnung zu tragen, und um einen Kurzschluss des der Stirnfläche am nächsten liegenden Elektrodenpaares bei Verwendung einer metallischen Verspiegelung zu verhindern, weist der in Fig. 4 gezeigte 180°-Umlenker einen mit d bezeichneten Abstand der Steuerelektroden zur verspiegelten Endfläche auf. Im Vergleich zum 180°-Umlenker von Fig. 2 ist also beim 180°-Umlenker gemäss Fig. 4 ein kleiner passiver Richtkoppler der Länge d eingefügt. Die Berechnung des Übertragungsverhaltens dieser Struktur wurde unter der Annahme gleicher Beträge der gegensinnigen Verstimmung durchgeführt und die dabei auftretenden Ausdrücke mit Hilfe eines Rechners ausgewertet. Als wesentliches Ergebnis zeigt sich, dass für den Fall, dass d verschieden von Null ist, eine vollständige Überkopplung des Lichtes in den zweiten Arm des Richtkopplers nicht mehr möglich ist. Es lassen sich jedoch über die Verstimmung Punkte optimaler Überkopplung einstellen, wenn d nur Bruchteile der einfachen Koppellänge L beträgt. Die Bereiche, in denen in Abhängigkeit von der normalisierten Kopplerlänge l/L und der normalisierten Phasenverstimmung $\Delta\beta \cdot 1/\pi$ mindestens 90% der Lichtleistung übergekoppelt werden, weichen für Abstände d, welche kleiner als das 0,2-fache der einfachen Koppellänge L sind, nur unwesentlich von den Bereichen, die für verschwindenden Abstand d berechnet worden sind, ab. Für eine angenommene einfache Koppellänge L von 1 mm muss somit der Abstand zwischen dem der Endfläche nächstgelegenen Elektrodenpaar und der verspiegelten Substratkante kleiner als 0,2 mm sein. Diese Forderung lässt sich nach den bisher gemachten Schleif- und Poliererfahrungen erfüllen.

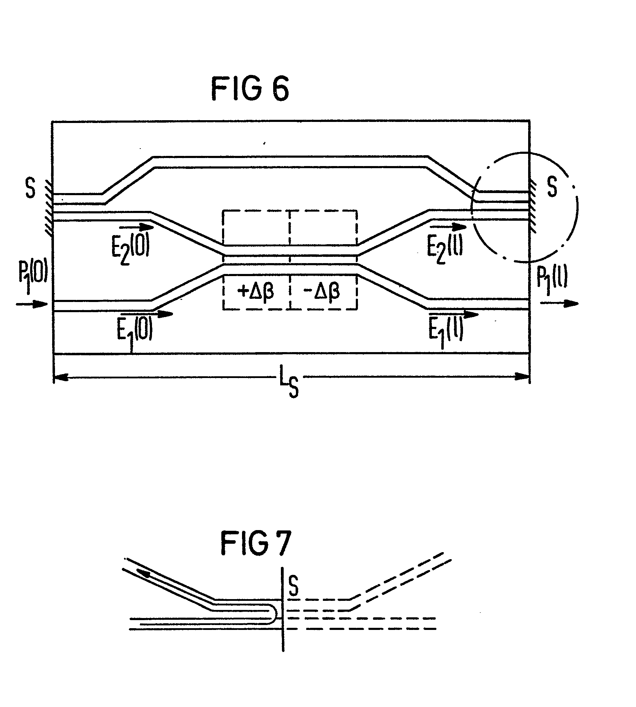

Eine andere Schaltung, bei der ebenfalls kein Kurzschluss zwischen Steuerelektroden und einem metallischen Spiegel S auftreten kann, ist in Fig. 5 dargestellt. Der vollständige Richtkoppler mit dieser Struktur wurde von S.K. Sheem, R.P. Moeller in «Optics Letters» 5 (1980) 5, 179–181, «Wavelength Monitoring of Single-Mode Diode Laser Using Guided-Wave Interferometer» beschrieben. Der steuerbare Richtkoppler wird mit der Spannung $U_1$ so verstimmt, dass er als Leistungsteiler K(3-dB-Koppler) arbeitet. Durch Einstellen einer geeigneten Phasendrehung am Phasenschieber P über die Spannung $U_2$ lässt sich dann eine vollständige Überkopplung erreichen, sofern die Länge 1 des Richtkopplers grösser als das $\frac{3}{4}$-fache der einfachen Koppellänge L und kleiner als das $\frac{3}{2}$-fache der einfachen Koppellänge L ist.

Diese Forderung ist aus praktischer Sicht erfüllbar. Unterschiedliche Längen des Abstands d können bei diesem Aufbau nach der Fig. 5 durch eine entsprechende Korrektur am Phasenschieber P ausgeglichen werden. Obwohl eine Struktur gemäss Fig. 5 gegenüber einer Struktur gemäss Fig. 4 eine etwa doppelt so grosse Baulänge aufweist, ist die Platzersparnis gegenüber einer kreisförmig gekrümmten Rückführung nach dem Stand der Technik immer noch erheblich. Eine kreisförmige Rückführung mit einem Krümmungsradius r von 10 mm ergibt eine benötigte Fläche von 10 mm mal 20 mm, wohingegen eine Schaltung nach Fig. 5 eine Fläche von 10 mm mal 30 µm ergibt.

Die benötigten Elektroden können zwar direkt auf dem Wellenleiter aufgebracht werden; vorteilhafterweise wird jedoch gemäss heute üblichen Verfahren eine dielektrische Zwischenschicht verwendet. Bei einer einfachen Koppellänge L von 1 mm und einem Abstand d von etwa 0,2 mm weist die Gesamtschaltung eine Gesamtlänge von etwa 1,5 mm auf, wobei Verbindungen zu anderen Strukturen bereits eingeschlossen sind, und eine Gesamtbreite von 0,2 mm, welche hauptsächlich durch die Breite der Elektroden verursacht wird.

Die vorgeschlagenen optischen Rückführungen dienen zum Aufbau neuartiger, rückgekoppelter optischer spektraler Filter. Ein tpyisches Beispiel, das mit Hilfe von Monomode-Lichtleitfasern realisiert worden ist, zeigt Fig. 6. Eine Lichtleistung $P_1$(0) verursacht am Eingang des $\Delta\beta$-Reversal-Richtkopplers ein elektrisches Feld mit der Amplitude $E_1(0)$. Am Ende des Richtkopplers mit der Länge 1 erscheinen die komplexen Feldamplituden $E_1(l)$ und $E_2(1)$ infolge des Überkopplungsvorgangs im Richtkoppler. Die Feldamplitude $E_2 1)$ wird über eine Rückführung, welche zwei 180°-Umlenker aufweist, rückgekoppelt, weshalb dann am bisher noch ungenutzten Eingang des $\Delta\beta$-Reversal-Richtkopplers die Feldamplitude $E_2(0)$ erscheint. Die Feldamplitude $E_2(0)$ überlagert sich im Koppelbereich des $\Delta\beta$-Reversal-Richtkopplers mit der konstanten Feldamplitude $E_1(0)$. Eine geringe Veränderung der einfallenden Wellenlänge verursacht eine grosse Änderung der Phase von $E_2(0)$, da die komplexe Amplitude $E_2(0)$ um etwa 2 mal die Substratlänge $L_s$ verzögert ist.

Die in Fig. 6 gezeigte Struktur stellt ein spektrales Kammfilter dar, das optisch gesehen einem Ringresonator entspricht. Da dieses spektrale optische Filter schmalbandig aufgebaut werden kann, lassen sich minimale Änderungen in der Wellenlänge der Quelle detektieren. Die Struktur nach Fig. 6 zeichnet sich dadurch aus, dass die Koppelverluste gering sind und dass die Polarisation nicht zerstört wird. Wenn beide Eingänge eines Richtkopplers mit kohärenten Wellen angeregt sind, hängen die Lichtleistungen an den beiden Ausgängen dieses Lichtkopplers sowohl von der Amplitude als auch von der Phase der Lichtleistungen an den Eingängen ab. Daher zeigt ein solcher Richtkoppler Phasensensitivität. Bei einigen optischen Kommunikationssystemen werden Lichtquellen von hoher spektraler Stabilität und Reinheit benötigt. Unter Verwendung der Phasensensitivität von Richtkopplern können spektrale Wellenlängenfilter von hoher Qualität über eine optische Rückkopplung von Richtkoppler-Ausgang zu Richtkoppler-Eingang realisiert werden.

Die für die Rückkopplung notwendigen Reflexionen werden mit Hilfe von zwei halbierten Richtkopplern mit Spiegelebenen S durchgeführt, wobei die halbierten Richtkoppler mit Spiegelebenen S wie normale Richtkoppler fungieren (Fig. 7).

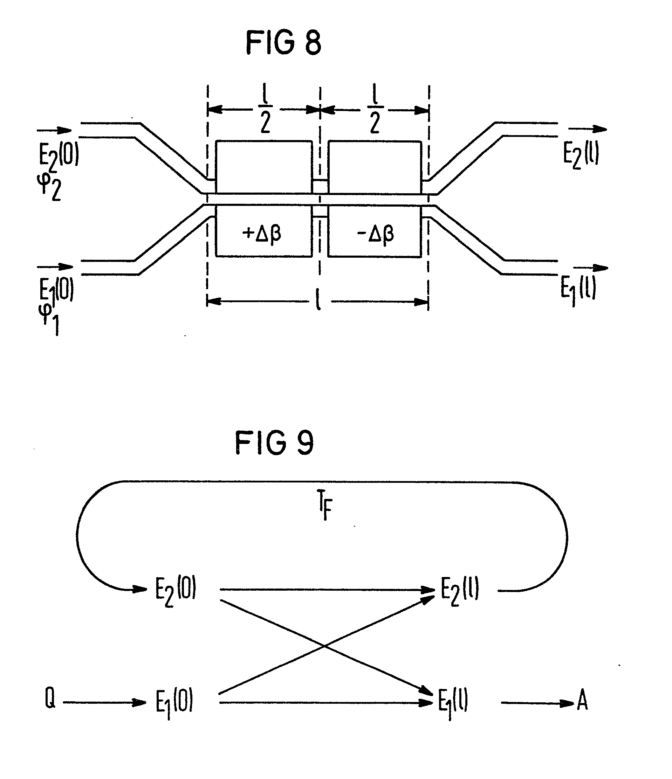

Fig. 8 zeigt einen $\Delta\beta$-Reversal-Richtkoppler mit Wechselwirkungslänge 1, wobei jeder $\Delta\beta$-Abschnitt ½ lang ist. Die einfallende Lichtwelle $E_1(0)$ hat die Phase $\varphi_1 = 0$, wohingegen $E_2(0)$ gegenüber $E_1(0)$ um die Phase $\varphi_2$ verzögert ist. Die komplexe Übertragungsmatrix dieses Systems ist in «Switched Directional Couplers with Alternating $\Delta\beta$», IEEE, QE-12 (1976), 396–401, von H. Kogelnik und R.V. Schmidt beschrieben. Fig. 9 zeigt ein mathematisches Modell für das ganze Rückkopplungssystem einer Struktur gemäss Fig. 6. Die Übertragungsfunktion $T_{FG}(j\omega)$ der Rückkopplungsschleife wird angenommen als

$$T_F(j\omega) = \varkappa \cdot e^{-j\omega\tau_F},$$

wobei $\varkappa$ den Rückkopplungswirkungsgrad einschliesslich aller Verluste der Wellenleiter und der Spiegel S bezeichnet, $\omega$ die Lichtfrequenz ist und $\tau_F$ die Verzögerungszeit darstellt, die durch die Rückkopplungsschleife der Länge 2 $L_s$ verursacht ist:

$$\tau_F = \frac{2L_s}{c_o} n_{eff}$$

mit $c_o$ Lichtgeschwindigkeit und $n_{eff}$ effektiven Brechungsindex der geführten Mode.

Es gilt die Beziehung: $E_2(0) = T_F \cdot E_2(1)$. Die komplexe Übertragungsfunktion des Systems gemäss Fig. 6 ist folgendermassen definiert: $H(j\omega) = E_1(1)/E_1(0)$. Für praktische Zwecke ist nur die Übertragungsfunktion der Lichtleistung $H_P(\omega) = |H(j\omega)|^2$ von Interesse. Da der Rückkopplungswirkungsgrad konstant ist, ist die Übertragungsfunktion der Lichtleistung $H_P(\omega)$ eine periodische Funktion entsprechend der Frequenz. Wenn der Rückkopplungswirkungsgrad durch den Wirkungsgrad der Rückkopplungsleistung $\eta = \varkappa^2$ ersetzt wird, so ist die Lichtleistungsübertragungsfunktion $H_P$ von vier Parametern beeinflusst, nämlich von der Frequenz $\omega$, dem Wirkungsgrad $\eta$ der rückgekoppelten Leistung, der normalisierten Richtkopplerlänge $\delta = 1/L$ und der normalisierten Phasenverstimmung $\alpha = \Delta\beta \cdot l/\pi$. Nimmt man eine Wellenlänge $l_o$ von 1,3 µm, eine Substratlänge $L_s$ von 20 mm und einen effektiven Brechungsindex für Lithiumniobat $n_{eff}$ von 2,2 an, so ist das Verhältnis $L_s/l_o$ grösser als $10^4$, weswegen die Phase der Rückkopplungsschleife $\psi_F = \omega \cdot \tau_F$ sehr frequenzempfindlich ist. Berechnungen haben ergeben, dass die Minima der Funktion $H_P$ um die Frequenz $f_P = c_o/(2 \cdot L_s \cdot n_{eff}) = 3,4$ GHz entfernt sind. Für den Fall $\Delta\beta = 0$ erhält man besonders schmalbandige Kammfilter bei eher grossen Wirkungsgraden der Leistungsrückkopplung $\eta > 0,5$ und mit $2N < \delta < \eta + 0,5$, wobei N = 0, 1, 2...

Für den Fall, dass $\Delta\beta$ verschieden von Null ist, wurde eine Richtkopplerlänge von $1 = 5,75$ L angenommen, wofür man im Fall von $\Delta\beta = 0$ ein nicht besonders schmalbandiges Filter erhalten würde. Für eine normalisierte Phasenverstimmung $\alpha$ von etwa 2,5 erreicht die Funktion $H_P$ ein absolutes Minimum. Wenn dann $\alpha$ weiter vergrössert wird, verschieben sich die Lagen der relativen Minima von $H_P$. Für $\alpha$ von etwa 5 ist die Lage des relativen Minimums von $H_P$ gegenüber der Lage des relativen Minimums von $H_P$ für verschwindendes $\alpha$ um etwa $f_P/2$ verschoben. Dies zeigt zwei Vorteile einer Struktur nach Fig. 6: 1. Es können Filterstrukturen mit nicht-optimalen Richtkopplerlängen 1 zu sehr scmalbandigen Filtern verstimmt werden. 2. Es können Sperrbereiche und Durchlassbereiche des Filters durch elektrisch hervorgerufene Verstimmung $\Delta\beta$ verschoben werden.

Der Einfluss der Temperatur hängt von der Polarisation der geführten Mode ab. Bei Verwendung von Lithiumniobat verschiebt sich bei einer Temperaturänderung von 1 K der Peak der vom Filter durchgelassenen Frequenz für eine $HE_{00}$-Mode um 0,4 GHz. Wenn die Temperatur des gesamten Filtersubstrats kontrolliert wird, können Verschiebungen in der Frequenz eines Lasers mit sehr hoher Auflösung nachgewiesen werden. Wenn in der Rückkopplungsschleife noch ein Phasenschieber angebracht wird, kann das Filter gemäss Fig. 6 kontinuierlich in der Frequenz verstimmt werden.

Der Resonator gemäss Fig. 6 weist noch folgende Vorzüge auf: Die Stärke der Rückkopplung kann über die beiden Rückführungs-Richtkoppler beliebig verändert werden, so dass z.B. eine zusätzliche Modulation möglich ist. Die Resonatorlänge kann, bei gleicher Baulänge und nur unwesentlich grösserer Breite, doppelt so gross werden.

Die Dämpfung in der Rückkopplungsschleife kann beeinflusst werden. Es handelt sich bei der Struktur gemäss Fig. 6 um eine ko-direktionale, rückwirkungsfreie Kopplung, bei der kein Einfluss auf die Quelle Q bzw. den Koppeleingang erfolgt.

**Patentansprüche**

1. Optisches spektrales Filter zur Überführung einer Eingangslichtleistung in eine gefilterte Ausgangslichtleistung, bei dem ein integriert optischer Richtkoppler zur phasenangepassten Aufteilung der Eingangslichtleistung auf die Ausgänge der zwei benachbarten Wellenleiter vorgesehen ist, dadurch gekennzeichnet, dass jeder der zwei Wellenleiter einen Eingang für Licht aufweist, von denen der erste mit der Eingangslichtleistung ($E_1(0)$) beaufschlagt ist, und dass ausserdem wenigsten zwei optische Richtkoppler vorgesehen sind, die als 180°-Umlenker ausgebildet sind und die Streifenwellenleiter aufweisen, deren Endflächen verspiegel sind, und über die der einen der Ausgänge des Richtkopplers verlassende Teil ($E_2(1)$) der Eingangslichtleistung auf den zweiten Eingang des optischen Richtkopplers phasensensitiv rückgekoppelt ist.

2. Optisches spektrales Filter nach Anspruch 1, dadurch gekennzeichnet, dass die 180°-Umlenker halbierte optische Richtkoppler sind.

3. Optisches spektrales Filter nach Anspruch 1 oder 2, gekennzeichnet durch einen steuerbaren optischen Richtkoppler zur phasenangepassten Aufteilung der Eingangslichtleistung.

4. Optisches spektrales Filter nach Anspruch 1 oder 2, gekennzeichnet durch einen 2-Stufen-$\Delta\beta$-Reversal-Richtkoppler zur phasenangepassten Aufteilung der Eingangslichtleistung.

## Claims

1. An optical spectral filter for convertign the energy of an input light beam into a filtered output light beam, wherein is provided an integrated optical directional coupler and serves to distribute the input light to the outputs of the two adjacent waveguides in a phase-adapted manner, characterised in that each of the two waveguides possesses an input for light, the first of which is acted upon by the energy of the input light [$E_1(0)$], and that furthermore at least two optical directional couplers are provided, designed as 180°-reflectors, with strip waveguides whose end surfaces are mirro-coated, and by means of which the one part [$E_2(1)$] of the input light energy which leaves one of the outputs of the directional coupler is fed-back onto the second input of the optical directional coupler in a phase-sensitive manner.

2. An optical spectral filter as claimed in Claim 1, characterised in that the 180°-reflectors are halved optical directional couplers.

3. An optical spectral filter as claimed in Claim 1 or 2, characterised by a controllable optical directional coupler for the phase-adapted distribution of the input light power.

4. An optical spectral filter as claimed in Claim 1 or 2, characterised by a 2-stage $\Delta\beta$-reversal directional coupler for the phase-adapted distribution of the input light energy.

## Revendications

1. Filtre spectral optique pour la conversion d'une puissance lumineuse d'entrée en une puissance lumineuse de sortie filtrée et dans lequel il est prévu un coupleur optique directionnel intégré servant à réaliser la répartition, adaptée du point de vue de la phase, de la puissance lumineuse d'entrée entre les sorties de deux guides d'ondes voisins, caractérisé par le fait que les deux guides d'ondes possèdent des entrées pour la lumière, dont la première est chargée par la puissance lumineuse d'entrée ($E_1(0)$) et qu'en outre il est prévu au moins deux coupleurs directionnels qui sont réalisés sous la forme de déflecteurs à 180°, et qui possèdent des guides d'ondes en forme de bandes, dont les surfaces d'extrémité sont métallisées et au moyen desquels la partie ($E_2(1)$), qui quitte l'une des sorties du coupleur directionnel, de la puissance lumineuse d'entrée est renvoyée par réaction, d'une manière sensible à la phase, à la seconde entrée du coupleur optique directionnel.

2. Filtre spectral optique suivant la revendication 1, caractérisé par le fait que les déflecteurs à 180° sont des coupleurs optiques directionnels subdivisés en deux.

3. Filtre spectral optique suivant la revendication 2, caractérisé par un coupleur optique directionnel pouvant être commandé et qui sert à répartir, d'une manière adaptée à la phase, la puissance lumineuse d'entrée.

4. Filtre spectral optique suivant la revendication 1 ou 2, caractérisé par un coupleur optique à inversion $\Delta\beta$ à 2 étages, qui sert à répartir, d'une manière adaptée à la phase, la puissance lumineuse d'entrée.

FIG 1

# FIG 2

# FIG 3

## FIG 4

$P_a$

$+U$     $-U$

$P_e$

$\dfrac{l}{3}$     $\dfrac{l}{6}$     $d$     $S$

## FIG 5

K     P

$+U_2$     $d$     $S$

$+U_1$

$P_a$

$P_e$

$-U_2$

$+U_1$

# FIG 6

# FIG 7

# FIG 8

$$E_2(0)$$
$$\varphi_2$$

$$\frac{l}{2}$$

$$\frac{l}{2}$$

$$E_2(l)$$

$$+\Delta\beta$$

$$-\Delta\beta$$

$$E_1(0)$$
$$\varphi_1$$

$$l$$

$$E_1(l)$$

# FIG 9

$$T_F$$

$$E_2(0) \longrightarrow E_2(l)$$

$$Q \longrightarrow E_1(0) \longrightarrow E_1(l) \longrightarrow A$$